Europäisches Patentamt

(19) European Patent Office

Office européen des brevets

(11) Publication number : **0 357 972 B1**

(12) **EUROPEAN PATENT SPECIFICATION**

(45) Date of publication of patent specification :
22.04.92 Bulletin 92/17

(51) Int. Cl.⁵ : **B62D 49/06, B62D 49/08**

(21) Application number : **89114529.4**

(22) Date of filing : **07.08.89**

(54) Composite ferro-concrete ballast for agricultural tractors.

(30) Priority : **08.09.88 IT 5338488 U**

(43) Date of publication of application :
**14.03.90 Bulletin 90/11**

(45) Publication of the grant of the patent :
**22.04.92 Bulletin 92/17**

(84) Designated Contracting States :
**AT CH DE ES FR GB LI**

(56) References cited :
**DE-A- 2 228 049**
**DE-A- 2 543 683**
**DE-A- 3 223 990**
**GB-A- 1 200 061**
**GB-A- 1 328 203**
**US-A- 3 029 088**

(73) Proprietor : **SAME S.p.A.**
**Viale F. Cassani, 14**
**I-24047 Treviglio Bergamo (IT)**

(72) Inventor : **Hampel, Gerald**
**c/o Same S.p.A. Viale F. Cassani, 14**
**I-24047 Treviglio (Bergamo) (IT)**

(74) Representative : **Buzzi, Franco et al**
**c/o Jacobacci-Casetta & Perani S.p.A. Via**
**Alfieri, 17**
**I-10121 Torino (IT)**

## Description

The present invention relates to ballast for agricultural tractors of the type comprising a body which acts as an inert mass and as a strong structure with attachments and connection members.

Ballast of this type currently used for agricultural tractors is normally constituted by a homogeneous metal mass (normally of cast iron) which combines the the two functions of an inert mass and of a strong structure for the transmission of the forces between the attachment points of the ballast and the tractor.

Known is in the art, from DE-A- 25 43 683, a ballast for agricultural tractors the body of which has a composite structure constituted by an inner metal core and by a conglomerate block defining the inert mass and incorporating the metal core.

In many cases, towing hooks (front and rear) through which pass the forces that the mass of the ballast must withstand are connected to the ballast. A similar case is that of ballast which is fixed to the three-point linkage of the lifting device of a tractor, in which the forces that the ballast must withstand are the reaction forces of the three suspension points.

Currently-known ballasts have the problem that they are relatively expensive and have low and uneven strength characteristics, due mainly to the technique by which they are made (casting).

The object of the present invention is to avoid the above problems and this object is achieved by virtue of the features set forth in the characterising portion of Claim 1.

Additional features of the ballast according to the invention are set forth in subclaims 2-5.

The invention will now be described in detail which reference to the appended drawings, provided purely by way of non-limiting example, in which:

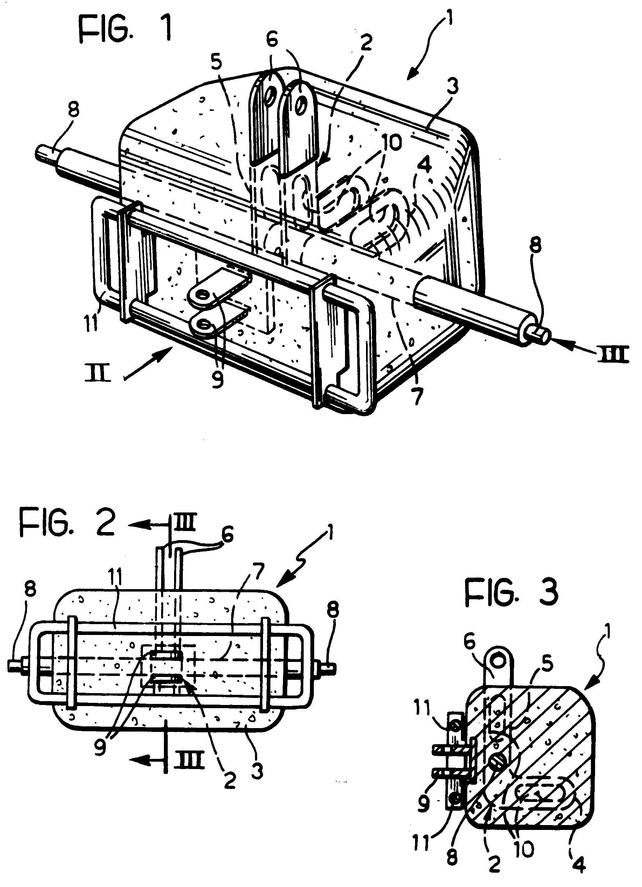

Figure 1 is a schematic perspective view of a composite ballast for agricultural tractors according to the invention,

Figure 2 is a front elevational view taken on the arrow II of Figure 1, and

Figure 3 is a side elevational view taken on the arrow III of Figure 1.

With reference to the drawings, ballast according to the invention for agricultural tractors is generally indicated 1. In brief, the ballast 1 has a composite structure (typically of iron and concrete) in which an inner core (generally of iron) performs the function of an element for withstanding the transmitted forces which the ballast must withstand, whilst a mass (generally of concrete) connected thereto has the functions of an inert mass and, due to the particular technique of its construction and production, provides an additional binding strength.

In detail, the ballast 1 is constituted by an internal iron core 2 which forms the strong structure of the ballast, and by a block of cementitious conglomerate 3 which defines the inert mass of the ballast and in which the core 2 is incorporated. In the example illustrated, the core 2 has a generally L-shaped configuration with a horizontal arm 4 which is entirely encased in the central part of the block 3 and a vertical arm 5 which projects from the top of the block 3 and forms an attachment 6. A horizontal bar 7, incorporated in the block 3, passes transversely through the vertical arm 5 and its ends project from the sides of the block to form two lateral attachments 8. A frontal attachment 9 also extends from the base of the vertical arm 5 of the core 2 and projects from the front face of the block 3.

The two arms 4 and 5 of the core 2 are provided with apertures 10 (or alternatively with feet or projections) which are adapted to encourage the intrusion or at any rate the anchoring of the cementatious conglomerate constituting the block 3 to the inner core 2.

The materials (iron and concrete) which constitute the composite structure of the ballast 1 have similar moduli of thermal expansion, ensuring that they are effectively and permanently bonded, even in the presence of temperature variations. The metal structure of the inner core 2 ensures that the forces transmitted between the attachment and connection points 6, 8 and 9 of the ballast 1 and the tractor are withstood well.

In order to protect the front of the ballast 1 in the event of a collision, a front bumper structure in the form of a metal frame 11 is also fixed to the conglomerate block 3.

## Claims

1. Ballast for agricultural tractors, comprising a body which acts as an inert mass and as a strong structure with attachments and connection members, wherein the body of the ballast (1) has a composite structure constituted by an inner metal core (2) defining the strong structure, and by a conglomerate block (3) defining the inert mass and incorporating the metal core (2), characterised in that the inner metal core (2) comprises a strong structure having a substantially L-shaped general configuration having a horizontal arm (4) which is entirely encased in the central part of the block (3) and a vertical arm (5) which projects from the top of the block (3) and forms an upper attachment (6), and in that a horizontal bar (7) incorporated in the block (3) passes transversally through the vertical arm (5) of the said core (2) and its ends project from the sides of the block (3) defining two lateral connection members (8).

2. Ballast according to Claim 1, characterised in that the inner core (2) is for iron and the conglomerate of the block (3) is cementicious.

3. Ballast according to Claim 1, characterised in that a frontal attachment (9) fixed to the conglomerate block (3) projects from the front side thereof.

4. Ballast according to any one of the preceding claims, characterised in that horizontal and vertical arms (4,5) of the inner core (2) have apertures (10) for the intrusion of the conglomerate of the block (3).

5. Ballast according to one or more of the preceding claims, characterised in that a front bumper structure (11) is fixed to the conglomerate block (3).

**Patentansprüche**

1. Ballast für landwirtschaftliche Schlepper, wobei der Ballast einen Körper besitzt, der als träge Masse und als fester Aufbau mit Befestigungs- und Verbindungselementen wirkt, wobei der Körper des Ballastes (1) einen Verbundaufbau besitzt, der von einem inneren Metallkern (2), der den festen Aufbau bildet, sowie einem Konglomeratblock (3) gebildet wird, der die träge Masse bildet und den Metallkern (2) aufnimmt, dadurch gekennzeichnet, daß der träge Metallkern (2) einen festen Aufbau enthält, der einen im wesentlichen L-förmigen Aufbau besitzt, der einen horizontalen Arm (4), der vollständig im Mittelteil des Blocks (3) eingeschlossen ist, sowie einen vertikalen Arm (5) besitzt, der von der Oberseite des Blocks (3) vorspringt und eine obere Befestigung (6) bildet, und daß eine horizontale Stange (7), die im Block (3) aufgenommen wird, quer durch den vertikalen Arm (5) des Kerns (2) verläuft, wobei ihre Enden, die von den Seiten des Blocks (3) vorspringen, zwei seitliche Verbindungselemente (8) bilden.

2. Ballast gemäß Anspruch 1, dadurch gekennzeichnet, daß der Innenkern (2) aus Eisen besteht, und das Konglomerat des Blocks (3) verkittend ist.

3. Ballast gemäß Anspruch 1, dadurch gekennzeichnet, daß eine vordere Befestigung (9), die am Konglomeratblock (3) befestigt ist, von der Vorderseite vorspringt.

4. Ballast gemäß jedem der bisherigen Ansprüche, dadurch gekennzeichnet, daß der horizontale und vertikale Arm (4, 5) des Innenkerns (2) Öffnungen (10) besitzen, in die das Konglomerat des Blocks (3) eindringt.

5. Ballast gemäß einem oder mehreren der bisherigen Ansprüche, dadurch gekennzeichnet, daß am Konglomeratblock (3) ein vorderer Stoßstangenaufbau (11) angebracht ist.

**Revendications**

1. Lest pour tracteur agricole, comprenant un corps qui joue le rôle d'une masse inerte et d'une structure robuste ayant des organes de fixation et des organes de raccordement, dans lequel le corps du lest (1) a une structure composite constituée par un noyau métallique interne (2) qui forme une structure robuste, et par un bloc aggloméré (3) qui forme une masse inerte et qui contient le noyau métallique (2), caractérisé en ce que le noyau métallique interne (2) est une structure robuste ayant une configuration générale pratiquement en L comprenant un bras horizontal (4) qui est entièrement enrobé dans la partie centrale du bloc (3) et un bras vertical (5) qui dépasse au-dessus du bloc (3) et forme un organe supérieur de fixation (6), et en ce qu'une barre horizontale (7) incorporée au bloc (3) passe transversalement à travers le bras vertical (5) du noyau (2), et ses extrémités dépassent des côtés du bloc (3) en formant deux organes latéraux de raccordement (8).

2. Lest selon la revendication 1, caractérisé en ce que le noyau interne (2) est formé de fer et l'élément aggloméré du bloc (3) est à base de ciment.

3. Lest selon la revendication 1, caractérisé en ce qu'un organe frontal de fixation (9) fixé au bloc aggloméré (3) dépasse de la face avant de celui-ci.

4. Lest selon l'une quelconque des revendications précédentes, caractérisé en ce que les bras horizontal et vertical (4, 5) du noyau interne (2) ont des ouvertures (10) destinées à la pénétration du matériau aggloméré du bloc (3).

5. Lest selon l'une quelconque des revendications précédentes, caractérisé en ce qu'une structure de pare-chocs avant (11) est fixée au bloc aggloméré (3).

FIG. 1

FIG. 2

FIG. 3